# EUROPÄISCHE PATENTSCHRIFT

(11) **EP 2 527 935 B1**
(45) Veröffentlichungstag und Bekanntmachung des Hinweises auf die Patenterteilung: **03.12.2014**
(21) Anmeldenummer: 11167589.8
(22) Anmeldetag: 26.05.2011
(51) Int. Cl.: G05B 19/042

(54) **Verfahren zum Betrieb eines Automatisierungssystems**
Method for operating an automation system
Procédé destiné au fonctionnement d'un système d'automatisation

(43) Veröffentlichungstag der Anmeldung: 28.11.2012
(73) Patentinhaber: Siemens Aktiengesellschaft, 80333 München (DE)
(72) Erfinder: Jänicke, Peter, 91058 Erlangen (DE)

(56) Entgegenhaltungen:
- EP-A1- 2 169 487
- EP-A2- 1 659 718
- WO-A1-03/028258
- WO-A1-03/028259
- DE-A1- 10 004 425
- DE-A1- 10 113 261
- DE-A1- 10 260 807

## Beschreibung

Die Erfindung betrifft ein Verfahren zum Betrieb eines Automatisierungssystems mit mehreren über eine serielle Verbindung kommunikativ verbundenen Kommunikationsteilnehmern, von denen zumindest einer als Sender und zumindest einer als Empfänger fungiert. In einem Automatisierungssystem, das normalerweise als Echtzeitsystem betrieben wird, mit mehreren in dem Automatisierungssystem als Kommunikationsteilnehmer fungierenden Baugruppen besteht die Notwendigkeit, diese Kommunikationsteilnehmer zu synchronisieren, um gleichzeitiges Arbeiten zu ermöglichen. Wenn die Kommunikationsteilnehmer nicht mit einem systemweiten Takt versorgt werden, wie dies bei größeren Abständen zweckmäßig und üblich ist, entsteht unvermeidlich ein Jitter, der in der Größenordnung einer Taktperiode liegt, mit der die Kommunikationsteilnehmer jeweils intern getaktet werden und durch das Einsynchronisieren eines Synchronisationssignals entsteht.

Automatisierungssysteme der eingangs genannten Art und Verfahren zu deren Betrieb sind an sich bekannt. Nachteilig ist allerdings bei einer seriellen Übertragung eines Synchronisationssignals ein dabei unvermeidlich entstehender zusätzlicher Jitter. Dieser tritt dadurch auf, dass gewöhnlich das serielle Protokoll nicht zu beliebigen Zeitpunkten gesendet werden kann. Die Gründe dafür können sein, dass das Synchronsignal erst gesendet und damit dem oder jedem Empfänger notifiziert werden kann, wenn eine laufende Datenübertragung abgeschlossen ist. Des Weiteren ist die Baudrate der Übertragung gegenüber dem jeweiligen Baugruppentakt gering, auch wenn sie zweckmäßig durch einen festen Teiler aus dem jeweiligen Baugruppentakt gebildet wird. Schließlich erfolgt die Übertragung durch Datensymbole, die zwar ebenfalls durch einen festen Teiler aus dem Systemtakt gebildet werden, insgesamt aber die Dauer der Datenübertragung gegenüber dem jeweiligen Baugruppentakt vergleichsweise lang andauernd werden lässt.

Die DE 101 13 261 A1 vermeidet das Problem, das Synchronsignale normalerweise nicht zu jedem Zeitpunkt gesendet werden können, weil sich die Situation ergeben kann, dass zuvor der Abschluss einer laufenden Datenübertragung abgewartet werden muss dadurch, dass das Synchronsignal jeweils zum Ende eines Kommunikationszyklus gesendet wird und vor dem Senden des Synchronsignals in dem Kommunikationszyklus eine Reserve vorgesehen ist, während derer keine Datenübertragung stattfindet. Zur Synchronisation ist in der DE 101 13 261 A1 vorgesehen, das alle Kommunikationsteilnehmer über eine gleiche Zeitbasis verfügen, indem diesen mit dem Synchronsignal der Beginn eines neuen Kommunikationszyklus notifiziert wird und indem jeder Kommunikationsteilnehmer die Dauer eines Kommunikationszyklus kennt.

In der WO 03/028258 A wird ein Synchronisationsverfahren beschrieben, bei dem ein Zeitmaster ein Synchronisationstelegramm mit einem davon als Nutzdatum umfassten Soll-Empfangszeitpunkt an einen ersten Empfänger sendet. Der erste Empfänger korrigiert auf Basis des Soll-Empfangszeitpunkts und eines Ist-Empfangszeitpunkts seine lokale Zeitbasis. Der erste Empfänger sendet des Synchronisationstelegramm an einen weiteren Empfänger und passt dafür den Soll-Empfangszeitpunkt auf Basis einer Leitungslaufzeit und einer Verweildauer an. Jeder weitere Empfänger korrigiert seine lokale Zeit auf Basis des jeweils empfangenen Soll-Empfangszeitpunkts und des tatsächlichen Empfangszeitpunkts (Ist-Empfangszeitpunkt).

Die EP 2 169 487 A1 befasst sich mit den Auswirkungen unterschiedlicher zeitlicher Korrelationen von verschachtelten Verarbeitungszyklen und schlägt zum Erhalt einer vorhersehbaren Antwortzeit eine Synchronisation dieser Verarbeitungszyklen vor. Die WO 03/028259 A1 basiert auf einer Synchronisation lokaler Taktsignale durch einen Regelungsvorgang.

Eine Aufgabe der Erfindung besteht entsprechend darin, ein Verfahren zum Betrieb eines Automatisierungssystems anzugeben, bei dem zum Übertragen eines Synchronsignals zwischen von dem Automatisierungssystem umfassten Kommunikationsteilnehmern, von denen zumindest einer als Sender und zumindest einer als Empfänger fungiert, die oben genannten Nachteile zu vermeiden oder zumindest deren Auswirkungen zu reduzieren.

Diese Aufgabe wird erfindungsgemäß mit den Merkmalen des Anspruchs 1 gelöst. Dazu ist bei einem Verfahren zum Betrieb eines Automatisierungssystems der eingangs genannten Art vorgesehen, dass auf Senderseite ein Maß für einen Versatz zwischen einem Auftreten eines Synchronsignals und einem Kommunikationstakt ermittelt wird, wobei das ermittelte Maß für den Versatz bei einer Datenübertragung an den oder jeden Empfänger übermittelt wird, wobei der oder jeder Empfänger nach Empfang des ermittelten Maßes für den Versatz das Verstreichen einer entsprechenden Zeitspanne abwartet und nach Verstreichen der Zeitspanne ein Ausgangssignal in Reaktion auf das vom Sender registrierte und auf diese Weise an den oder jeden Empfänger notifizierte Synchronsignal erzeugt.

Der Vorteil der Erfindung besteht vor allem darin, dass durch die Ermittlung eines Maßes für den Versatz zwischen dem Auftreten des Synchronsignals und dem Kommunikationstakt hinsichtlich der zeitlichen Auflösung der Notifikation des Synchronsignals an den oder jeden Empfänger eine Untersetzung des Kommunikationstaktes möglich ist. Der Kommunikationstakt wird damit quasi feingranular eingeteilt und bezogen auf den Kommunikationstakt wird auf Empfängerseite durch das Abwarten des Verstreichens einer dem senderseitig ermittelten Versatz entsprechenden Zeitspanne die gleiche Untersetzung des Kommunikationstaktes und eine entsprechend feingranulare Auflösung erreicht. Der durch die serielle Übertragung entstehende und bisher unvermeidliche Jitter ist damit eliminiert. Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens wird als Maß für den Versatz zwischen dem Auftreten des Synchronsignals und dem Kommunikationstakt ein Wert eines mit dem Synchronsignal gestarteten Zählers verwendet. Der Versatz oder das Maß für den Versatz ist dann der Zählerstand beim nächsten Kommunikationstakt. Alternativ ist gleichfalls auch möglich, den Zähler mit jedem Kommunikationstakt zu starten und als Versatz oder Maß für den Versatz den Zählerstand beim Auftreten des Synchronsignals zu übernehmen. Ein Zähler ist eine einfache Funktionseinheit, die ohne Weiteres in Software oder in Hardware implementiert werden kann. Der Zählerstand kann ohne Weiteres als Maß für einen Versatz zwischen einem Auftreten des Synchronsignals und dem Kommunikationstakt verwendet werden.

Wenn der Wert des Zählers, also zum Beispiel der Startwert des Zählers bei einem dekrementierenden Zähler oder der Maximalwert des Zählers bei einem inkrementierenden Zähler in Bezug auf einen Kommunikationstakt so groß gewählt wird, dass der Zähler jedenfalls nicht während eine Kommunikationstaktes abläuft, kann der vollständige Kommunikationstakt feingranular hinsichtlich des Zeitpunkts des Auftretens des Synchronisationssignals aufgelöst werden.

Eine einfache Anwendung des Verfahrens ergibt sich, wenn der mit dem Synchronsignal gestartete Zähler mit jedem Auftreten eine Gerätetakts dekrementiert oder inkrementiert wird. Bei der alternativen Ausführungsform, bei der der Zähler mit jedem Kommunikationstakt gestartet wird kommt zum Beispiel eine Inkrementierung des Zählers in Betracht. Grundsätzlich ist es allerdings unerheblich ob ein inkrementierender oder ein dekrementierender Zähler verwendet wird. Wesentlich ist, dass mit dem Zähler ein Maß für einen zeitlichen Versatz aufgenommen wird. Dies ist genauso mit einem dekrementierenden wie mit einem inkrementierenden Zähler möglich. Das Maß für den zeitlichen Versatz ergibt sich besonders exakt, wenn der Zähler mit einem äquidistanten Signal getaktet wird. Dafür bietet sich der Gerätestakt des jeweiligen Automatisierungsgerätes an. Der Gerätetakt ist der Takt des jeweiligen Kommunikationsteilnehmers, der das Synchronsignal empfangen hat und anderen Kommunikationsteilnehmern das Synchronsignal notifiziert, also der in Bezug auf das Synchronsignal als Sender fungierende Kommunikationsteilnehmer.

Wenn der oder jeder Empfänger zum Abwarten des Verstreichens einer dem ermittelten Versatz entsprechenden Zeitspanne einen Zähler mit dem ermittelten Versatz lädt und beim Ablaufen des Zählers das Ausgangssignal erzeugt, ergeben sich auch auf Empfängerseite einfache Verhältnisse. Speziell wenn auf Seiten des Senders ein Zähler zum Ermitteln des Versatzes zwischen Auftreten des Synchronsignals und dem Kommunikationstakt verwendet wird, kann der ermittelte Versatz bei der Datenübertragung direkt an den oder jeden Empfänger übermittelt werden. Der oder jeder Empfänger erhält als den ermittelten Versatz den Zählerstand des Zählers des Senders. Jeder Empfänger lädt seinen Zähler mit dem empfangenen Versatz und erzeugt beim Ablauf des Zählers das Ausgangssignal.

Hinsichtlich des Zählers auf Empfängerseite bietet es sich an, dass auch dieser Zähler mit jedem Auftreten eines empfängerseitigen Gerätetaktes dekrementiert wird, also eines Gerätetaktes des oder jedes jeweils als Empfänger fungierenden Kommunikationsteilnehmers.

Der Ansatz gemäß der Erfindung lässt sich auch nutzen, um mehrere insbesondere unkorrelierte Signale oder Synchronsignale zu übertragen. Dies stellt bei seriellen Verbindungen eine besondere Herausforderung dar, weil die Signale in kurzem zeitlichen Abstand eintreffen können, die serielle Übertragung aufgrund der jeweiligen Baudrate und der zu verwendeten Datensymbole aber vergleichsweise lange dauert. Insoweit sieht eine Ausführungsform der Erfindung vor, dass bei einem ersten und einem zweiten (Synchron-)Signal mit jedem (Synchron-)Signal ein mit dem senderseitigen Gerätetakt beaufschlagter Zähler, insbesondere ein mit dem senderseitigen Gerätetakt dekrementierter Zähler, gestartet wird, wobei der erste Zähler bei einer zu dem ersten (Synchron-)Signal gehörenden ersten Datenübertragung mit dem Kommunikationstakt gestoppt wird, wobei in der ersten Datenübertragung der Stand des ersten Zählers übermittelt wird und wobei der zweite Zähler mit Abschluss der ersten Datenübertragung bei einer zu dem zweiten (Synchron-)Signal gehörenden zweiten Datenübertragung mit dem Kommunikationstakt gestoppt und in der zweiten Datenübertragung übermittelt wird.

Bei einer besonderen Ausführungsform dieser Variante des Ansatzes gemäß der Erfindung zur Übertragung mehrere Signale oder Synchronsignale ist vorgesehen, dass der Wert des ersten und zweiten Zählers in Bezug auf einen Kommunikationstakt ausreichend groß gewählt wird, so dass der Zähler jedenfalls nicht während einer vorgegebenen Mehrzahl von Kommunikationstakten abläuft. Die Größe des Zählers und die vorgegebene Mehrzahl von Kommunikationstakten bestimmt sich dabei nach dem Kommunikationstakt und der erwarteten Dauer zumindest der ersten Datenübertragung. Wenn davon ausgegangen wird, dass während einer ersten Datenübertragung nicht nur ein zweites, sondern auch ein drittes und eventuelle weitere (Synchron-) Signale eingehen, sollten die Zähler ausreichend groß sein, dass sich jedenfalls kein Ablauf ergibt bis die letzte Datenübertragung beginnt.

Die oben genannte Aufgabe wird auch mit einem Automatisierungsgerät gelöst, das als Kommunikationsteilnehmer in einem Automatisierungssystem der eingangs genannten Art verwendbar ist, das nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Automatisierungsgerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Insbesondere kann anstelle eines Zählers eine Uhr verwendet werden und anstelle dekrementierender oder dekrementierter Zähler können inkrementierende oder inkrementierte Zähler verwendet werden.

Es zeigen
- FIG 1: ein Automatisierungssystem mit durch eine serielle Verbindung kommunikativ verbundenen Automatisierungsgeräten zur Steuerung und/oder Überwachung eines technischen Prozesses,
- FIG 2: eine zeitliche Abfolge von Aktionen als Reaktion auf den Erhalt eines Synchronsignals bei einem Automatisierungsgerät und dessen Notifikation an andere Automatisierungsgeräte,
- FIG 3: eine Veranschaulichung der zeitlichen Abfolge von Aktionen gemäß FIG 2, aber entsprechend dem Ansatz gemäß der Erfindung,
- FIG 4: eine Darstellung entsprechend FIG 3 zur Veranschaulichung der Erhaltung zeitlicher Relationen bezüglich des Zeitpunkts des Erhalts eines Synchronsignals,
- FIG 5: eine besondere Anwendungssituation des Ansatzes gemäß der Erfindung, nämlich zur Übertragung mehrerer Signale, und
- FIG 6: eine Darstellung der Konfiguration der beteiligten Automatisierungsgeräte zur Ausführung des Verfahrens sowie ein Flussdiagramm zur Verdeutlichung der sender- und empfängerseitigen Verfahrensschritte bei der Anwendung des Ansatzes gemäß der Erfindung.

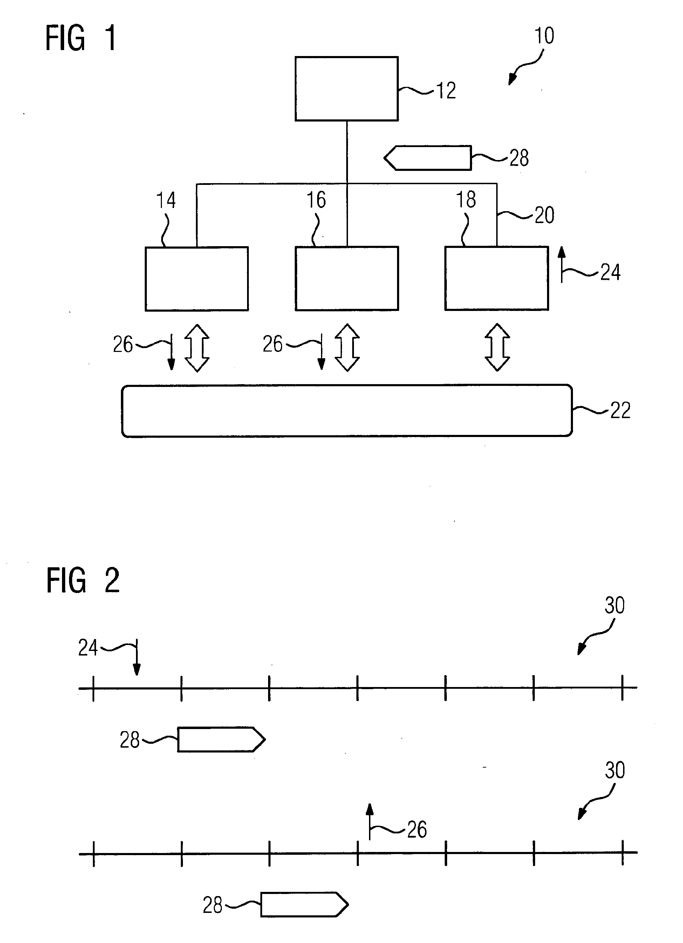

FIG 1 zeigt schematisch vereinfacht ein Automatisierungssystem 10 mit einer Mehrzahl von kommunikativ verbundenen Automatisierungsgeräten 12, 14, 16, 18. Aufgrund der zwischen den Automatisierungsgeräten 12-18 bestehenden kommunikativen Verbindung werden diese hier und im Folgenden allgemein auch als Kommunikationsteilnehmer bezeichnet und jedes Automatisierungsgerät kann je nach Kommunikationsbeziehung grundsätzlich sowohl als Sender wie auch als Empfänger fungieren.

Der Begriff Automatisierungsgerät umfasst sämtliche Geräte, Einrichtungen oder Systeme, also neben zum Beispiel Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse zum Beispiel zum Umformen oder Transportieren von Material, Energie oder Information etc. eingesetzt werden oder einsetzbar sind.

Zur kommunikativen Verbindung der Automatisierungsgeräte/Kommunikationsteilnehmer 12-18 untereinander ist eine serielle Verbindung 20 zur seriellen Datenübertragung vorgesehen, zum Beispiel ein serieller Bus. Insgesamt ist das Automatisierungssystem 10 zur Steuerung und/oder Überwachung eines nicht näher dargestellten technischen Prozesses 22 vorgesehen. Dabei werden in an sich bekannter Art und Weise Daten aus dem Prozess 22 aufgenommen und im Automatisierungssystem 10 verarbeitet. Das Automatisierungssystem 10 gibt aufgrund solcher Daten und interner Verarbeitungen Steuersignale an den technischen Prozess 22. Die Aufnahme von Daten aus dem Prozess 22 und das Ausgeben von Daten zum Prozess 22 erfolgt dabei zumindest im Wesentlichen unter Echtzeitbedingungen, um zum Beispiel digitale Regelungen zu ermöglichen. Dafür ist zum Beispiel erforderlich, dass mehrere Kommunikationsteilnehmer zeitgleich oder im Wesentlichen zeitgleich reagieren oder dass Kommunikationsteilnehmer auf ein periodisches Signal mit der gleichen Periodizität reagieren. Ein Signal aus dem technischen Prozess 22 oder aus dem Automatisierungssystem, dass eine solche Behandlung erfordert, wird im Folgenden als Synchronsignal bezeichnet. Mit einem solchen Synchronsignal kann zum Beispiel die gleichzeitige Ansteuerung mehrerer Aggregate im technischen Prozess 22 ausgelöst werden, auch wenn diesbezügliche Steuersignale von unterschiedlichen Automatisierungsgeräten 12-18 in den technischen Prozess 22 gegeben werden.

FIG 1 zeigt insoweit exemplarisch ein zum Beispiel von einem Automatisierungsgerät 18 periodisch erzeugtes Synchronsignal 24. Alle anderen Automatisierungsgeräte 14, 16 synchronisieren sich auf dieses Synchronsignal 24 und können so zeitlich korrelierte Aktionen auslösen. Bei dem in dem in der Darstellung angenommenen Beispiel werden insoweit von zwei anderen Automatisierungsgeräten 14, 16 Ausgabesignale 26 an den technischen Prozess 22 abgeben, zum Beispiel, um dort Aggregate, etwa Motoren, Ventile oder dergleichen, zu aktivieren oder zu deaktivieren. Um den anderen Automatisierungsgeräten 14, 16 das Synchronsignal 24 zu notifizieren und diesen damit die synchrone Erzeugung des jeweiligen Ausgangssignals 26 zu ermöglichen, sendet dasjenige Automatisierungsgerät 18, welches das Synchronsignal 24 aufgenommen hat, als Information zumindest über den Eingang des Synchronsignals 24 ein Telegramm 28 an das oder jedes betroffene Automatisierungsgerät 14, 16.

FIG 2 zeigt dazu - ebenfalls nur schematisch vereinfacht - über einem Kommunikationstakt 30 zunächst auf Empfängerseite den Eingang des Synchronsignals 24 und das aufgrund des Synchronsignals 24 versandte Telegramm 28. Das Telegramm 28 kann nicht zu beliebigen Zeitpunkten gesendet werden, sondern erst wenn eine laufende Datenübertragung abgeschlossen ist und jedenfalls abhängig vom Kommunikationstakt. Das Telegramm 28 wird (unterer Kommunikationstaktzeitstrahl) von einem als Empfänger fungierenden Automatisierungsgerät 12-18 empfangen und der Empfang des Telegramms 28 ermöglicht diesem die Erzeugung des Ausgangssignals 26 als Reaktion auf das Synchronsignal. Erkennbar ist dabei, dass der Kommunikationstakt die zeitliche Auflösung bestimmt, mit der auf ein Synchronsignal reagiert werden kann: Zu einem zwischen zwei Kommunikationstakten eingehenden Synchronsignal 24 kann jedenfalls frühestens im unmittelbar folgenden Kommunikationstakt ein Telegramm 28 abgesetzt werden, um anderen Kommunikationsteilnehmern den Eingang des Synchronsignals 24 zu notifizieren. Auf Empfängerseite scheint das Synchronsignal 24 dann synchron zum Kommunikationstakt eingegangen zu sein, was tatsächlich nicht der Fall ist. Der dadurch entstehende Fehler wird als Jitter bezeichnet. Zur Lösung dieses Problems sind bisher unterschiedliche Ansätze verfolgt worden: Zum Einen hat man darauf verzichtet, das Synchronsignal 24 überhaupt seriell zu übertragen und dabei die zusätzlich notwendige Kommunikationsleitung in Kauf genommen. Zum Anderen hat man bei einer seriellen Übertragung des Synchronsignals den Jitter mitunter auch akzeptiert, was allerdings bei hohen Anforderungen an die Synchronizität nicht möglich ist. Schließlich besteht auch noch die Möglichkeit, bei einer seriellen Übertragung des Synchronsignals den Jitter mit einer Phasenregelschleife (PLL) zu reduzieren. Ungünstig dabei sind aber der Zusatzaufwand und die Tatsache, dass die PLL den Jitter nur reduzieren, nicht aber vermeiden kann.

Der Ansatz gemäß der Erfindung nutzt eine Zeitmessung auf Senderseite, um einen Versatz zwischen dem Auftreten des Synchronsignals 24 und dem Beginn des nächsten zur Übermittlung eines Telegramms 28 möglichen Kommunikationstakts zu ermitteln. Der so ermittelte Versatz oder ein Maß für einen solchen Versatz wird im seriellen Datenstrom, also zum Beispiel als Nutzdatum in einem Telegramm 28, übertragen und auf Empfängerseite zum Ausgleich des Jitters durch Einfügen einer Verzögerung genutzt.

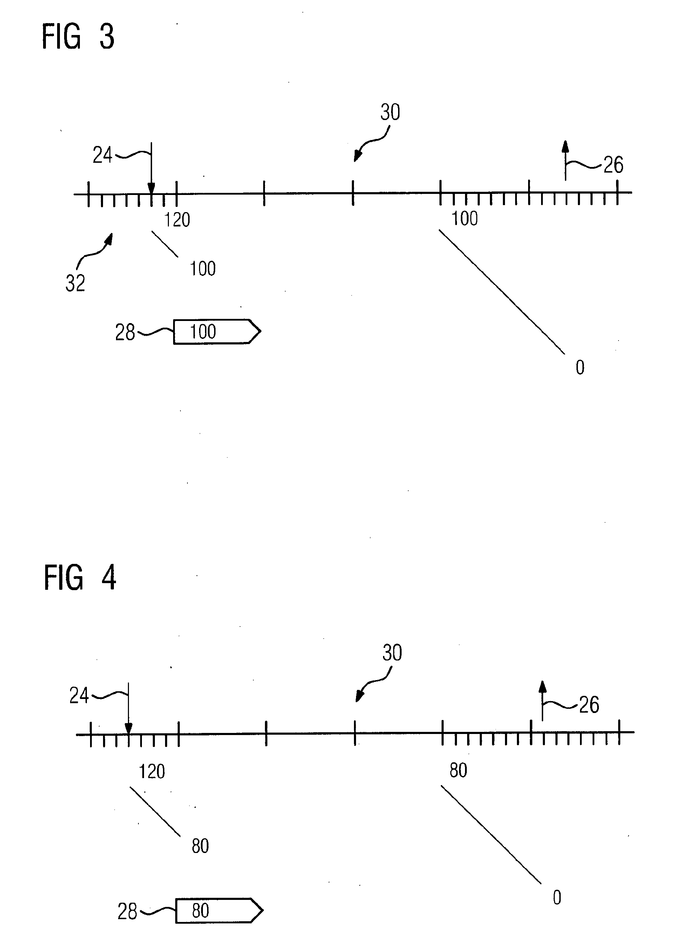

FIG 3 zeigt schematisch vereinfacht den Ansatz gemäß der Erfindung. Zu einem bestimmten Zeitpunkt geht bei einem Automatisierungsgerät 12-18 (FIG 1) ein Synchronsignal 24 ein. Das jeweilige Automatisierungsgerät 12-18 fungiert im Weiteren als Sender und hat den Eingang des Synchronsignals 24 mindestens einem weiteren Automatisierungsgerät 12-18 (Empfänger) mitzuteilen (zu notifizieren). Die linke Seite der Darstellung in FIG 3 illustriert Verhältnisse auf Seiten des Senders und die rechte Seite der Darstellung illustriert entsprechend Verhältnisse auf Seiten des Empfängers oder eines der Empfänger. Gezeigt ist, dass auf Senderseite ein Maß für einen Versatz zwischen einem Auftreten des Synchronsignals 24 und dem Kommunikationstakt 30 ermittelt wird. Hier wird als Maß für den Versatz zwischen dem Auftreten des Synchronsignals 24 und dem Kommunikationstakt 30 ein Wert eines mit dem Synchronsignal 24 gestarteten Zählers verwendet. Dafür ist mit dem Zahlenwert ,,120" der Startwert eines solchen Zählers eingezeichnet. Mit diesem Startwert wird der senderseitige Zähler beim Eintreffen des Synchronsignals 24 initialisiert. Danach wird der Wert des Zählers in regelmäßigen Abständen verringert (dekrementiert). Dafür kommt zum Beispiel ein Gerätetakt 32 in Betracht, also ein Takt eines Taktgebers, den das jeweilige Automatisierungsgerät 12-18 normalerweise ohnehin aufweist, zum Beispiel zur Taktung von dessen Mikroprozessor oder dergleichen. Zur Ermittlung des Maßes für den Versatz zwischen dem Auftreten des Synchronsignals 24 und dem Kommunikationstakt 30 wird der Stand des Zählers beim nächsten Kommunikationstakt 30 quasi eingefroren, indem das Dekrementieren beendet wird oder der Zählerstand in einem Zwischenspeicher gesichert wird. Dazu ist mit dem Zahlenwert "100" ein beispielhafter Wert für den Zählerstand zu diesem Zeitpunkt gezeigt (die Darstellung geht stark vereinfachend davon aus, dass auf der Zeitachse jeder zehnte Gerätetakt 32 durch einen Querstrich symbolisiert ist, so dass vom Eintreffen des Synchronsignals 24 bis zum nächsten Kommunikationstakt 30 der Zähler mit zweimal zehn Gerätetakten 32 dekrementiert wird). Dieser Zählerstand ist ein Beispiel für ein Maß für den Versatz zwischen dem Auftreten des Synchronsignals 24 und dem Kommunikationstakt 30. Im Folgenden wird ohne Verzicht auf die weitergehende Allgemeingültigkeit kurz nur noch vom Versatz und nicht mehr vom Maß für den Versatz gesprochen. Der Versatz wird sodann bei einer Datenübertragung an den oder jeden Empfänger übermittelt. Dazu ist zur Symbolisierung der Datenübertragung ein Telegramm 28 dargestellt, dass als Nutzdatum zumindest den ermittelten Versatz umfasst (dargestellt durch den Zahlenwert "100" im Telegramm 28). Der Empfänger wartet nach Erhalt des Telegramms und der davon umfassten Information hinsichtlich des Versatzes zwischen Eingang des Synchronsignals 24 und dem Kommunikationstakt 30 eine dem Versatz entsprechende Zeitspanne ab und erzeugt nach Verstreichen dieser Zeitspanne das Ausgangssignal 26. Dazu ist bei der schematisch dargestellten Ausführungsform auch auf Empfängerseite (rechte Seite der Darstellung in FIG 3) ein Zähler vorgesehen, der im Zusammenhang mit dem Empfang des Telegramms mit dem Wert des so erhaltenen Versatzes initialisiert wird (dargestellt durch den Zahlenwert "100"). Das Abwarten der Zeitspanne erfolgt auf Empfängerseite, indem der Zähler ausgehend vom jeweiligen Startwert mit dem empfängerseitigen Gerätetakt dekrementiert wird. Wenn der Zähler abgelaufen ist (Zahlenwert "0"), erzeugt der Empfänger das Ausgangssignal 26.

An der Darstellung in FIG 3 ist damit jetzt insgesamt zu erkennen, dass der Kommunikationstakt 30 feingranular aufgelöst wird und auch wenn die Notifikation des Eingangs eines Synchronsignals 24 an einen Empfänger weiterhin - aufgrund der Übertragung in einem protokoll- und damit kommunikationstaktgebundenen Telegramm 28 erfolgt - jeweils nur zum Beginn eines Kommunikationstakts 30 geschieht, der Zeitpunkt des tatsächlichen Eintreffens des Synchronsignals auf Senderseite berücksichtigt und dem Empfänger mitgeteilt wird. Die Erzeugung des Ausgangssignals 26 als Reaktion auf die Notifikation des Synchronsignals 24 ist damit vom Kommunikationstakt 30 unabhängig.

Zur weiteren Verdeutlichung ist in FIG 4 eine ähnliche Situation wie in FIG 3 dargestellt und zur Veranschaulichung kann angenommen werden, dass FIG 4 eine Situation im Automatisierungssystem 10 zu einem späteren Zeitpunkt als die in FIG 3 gezeigte Situation darstellt. Jedenfalls geht wieder ein Synchronsignal 24 ein und der Versatz zwischen dessen Eingang und dem Kommunikationstakt 30 wird über den Zähler erfasst ("abgelatcht"). Relativ zum Kommunikationstakt 30 geht bei der in FIG 4 gezeigten Situation das Synchronsignal früher ein, so dass auch der Zähler weiter abläuft, hier bis zu dem Zahlenwert "80". Dieser Zählerstand wird als Versatz an den Empfänger übermittelt und dort wird durch Initialisierung eines Zählers mit diesem Versatz und anschließendes Dekrementieren eine dem Versatz entsprechende Zeitspanne abgewartet, bis das Ausgangssignal 26 erzeugt wird. Anhand des Zeitpunkts der Erzeugung des Ausgangssignals 26 relativ zum Kommunikationstakt 30 erkennt man, dass das Ausgangssignals 26 in FIG 4 tatsächlich genau so viel früher erzeugt wird, wie das Synchronsignal 24 im Vergleich zu der Situation in FIG 3 früher eingetroffen ist. Neben der feingranularen Auflösung des Kommunikationstakts 30 - eine Untersetzung des Kommunikationstakts 30 - bleibt also auch eine Relation eines zeitlich nacheinander erfolgenden Auftretens mehrerer Synchronsignale 24 erhalten.

Bei der dargestellten Ausführungsform ist davon ausgegangen worden, dass der Wert des Zählers in Bezug auf einen Kommunikationstakt 30 ausreichend groß gewählt wird, so dass der Zähler jedenfalls nicht während eines Kommunikationstakts 30 abläuft. Dies ermöglicht, dass die komplette Dauer eines Kommunikationstakts 30 mit der oben erwähnten Granularität/Untersetzung aufgelöst werden kann.

Der Versatz kann auf Senderseite auch ermittelt werden, indem ein Zähler mit dem Kommunikationstakt gestartet wird, und mit Eintreffen des Synchronsignals 24 eingefroren wird. Entsprechend der oben für die Erläuterung der Darstellung in FIG 3 angenommenen Verhältnisse hätte ein von Null inkrementierender Zähler einen Wert von 50 erreicht. Auf der Empfängerseite wäre dann ein Zähler mit dem Wert 50 zu laden und zu dekrementieren. Bei Null wird das Signal ausgegeben. Alternativ kommt auch in Betracht, auf Empfängerseite mit jedem Kommunikationstakt oder mit vorgegebenen oder vorgebbaren Kommunikationstakten einen Zähler zu starten und den Zählerstand kontinuierlich mit dem als Versatz übergebenen Wert zu vergleichen. Sobald der Stand des Zählers den Wert für den Versatz erreicht hat, ist die auf Empfängerseite abzuwartende Zeitspanne verstrichen. Dann kann das Ausgangssignal 26 erzeugt werden.

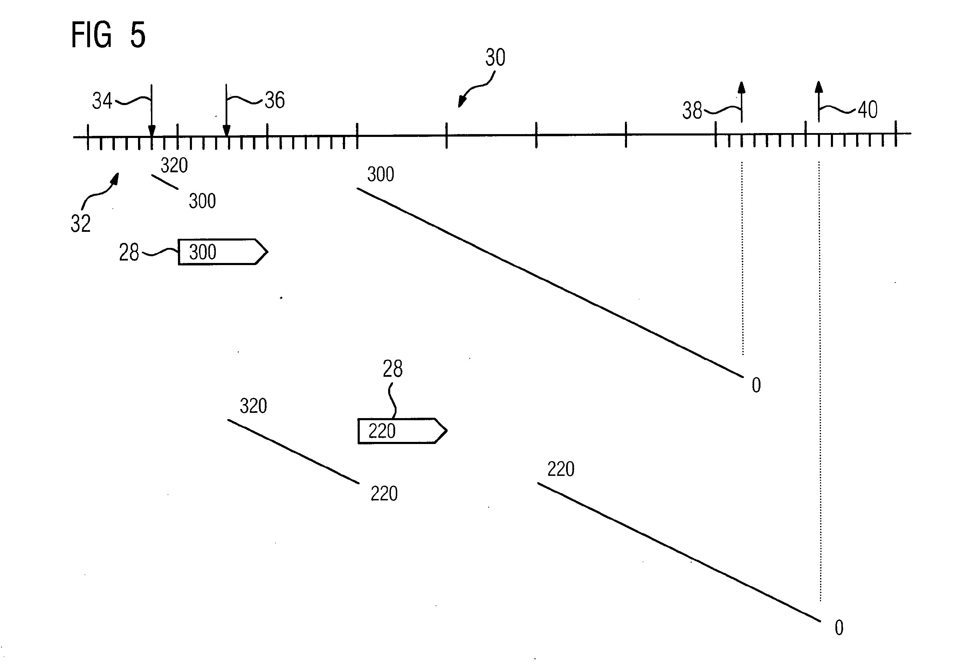

FIG 5 zeigt eine besondere Anwendungssituation für den Ansatz gemäß der Erfindung, nämlich zur Übertragung mehrerer, insbesondere unkorrelierter (Synchron-)Signale - erstes und zweites Signal 34, 36. Beim Eingang jedes Signals 34, 36 wird ein eigener Zähler gestartet (Startwert jeweils "320") und damit - wie zuvor - der Versatz zwischen dem Zeitpunkt des Eintreffens des Signals 34, 36 und dem nächstfolgenden Kommunikationstakt abgelatcht. Der für den Eingang des ersten Signals 34 ermittelte Versatz (Zahlenwert "300") wird mit einem Telegramm 28 an den Empfänger übertragen. Mit dem Erhalt des Telegramms 28 auf Empfängerseite wird ein dortiger erster Zähler mit dem erhaltenen Zählerstand ("300") initialisiert und es beginnt das Dekrementieren des Zählers bis dieser schließlich abläuft und zu dem ersten Synchronsignal 34 ein erstes Ausgangssignal 38 erzeugt wird. Das zwischenzeitlich eingegangene zweite Synchronsignal 36 wird genauso behandelt: Ein zweiter Zähler wird initialisiert ("320") und mit dem Gerätetakt dekrementiert solange bis in Bezug auf das zweite Synchronsignal 36 ein Kommunikationstakt 30 erreicht ist, mit dem ein neues Telegramm 28 gesendet werden kann. Der zweite Zähler ist im darstellten Beispiel bis zu dem Zahlenwert "220" abgelaufen und dieser Zählerstand wird mit einem Telegramm 28 an den Empfänger übermittelt. Dort wird ein zweiter Zähler mit diesem Zählerstand initialisiert und wenn der zweite Zähler abgelaufen ist, wird in Bezug auf das zweite Synchronsignal 36 auf Empfängerseite ein zweites Ausgangssignal 40 erzeugt. Wesentlich ist, dass der zeitliche Abstand des ersten und zweiten Ausgangssignals 38, 40 dem zeitlichen Abstand des ersten und zweiten Synchronsignals 34, 36 entspricht. Die zeitliche Relation der Eintreffens mehrerer (Synchron-)Signale 34, 36 bleibt also erhalten, auch wenn zu jedem Signal 34, 36 ein eigenes Telegramm 28 an den oder jeden Empfänger gesendet wird und wenn nach dem Senden eines ersten Telegramms 28 für das Senden eines zweiten Telegramms 28 erst die Übermittlung des ersten Telegramms 28 abgewartet werden muss.

Bei der in FIG 5 gezeigten Situation ist davon ausgegangen worden, dass der Wert der Zähler in Bezug auf eine Mehrzahl von Kommunikationstakten 30 ausreichend groß gewählt wird, so dass die Zähler jedenfalls nicht während einer vorgegebenen Mehrzahl von Kommunikationstakten 30 ablaufen. Die Größe des Zählers ermöglicht die Berücksichtigung der Übertragungsdauer eines oder mehrerer Telegramme 28. Die Größe der Zähler kann demnach in Ansehung eines erwarteten Signalaufkommens geeignet gewählt werden.

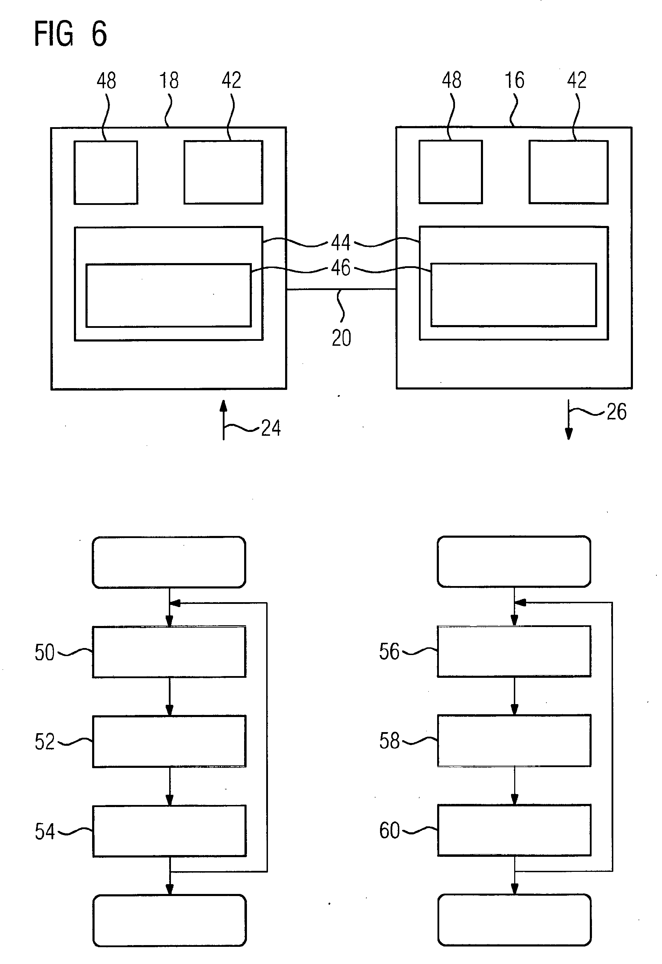

FIG 6 zeigt anhand der in FIG 1 angenommenen Situation zwei über eine serielle Verbindung 20 kommunikativ verbundene Automatisierungsgeräte 16, 18, von denen eines ein Synchronsignal 24 erhält, das dem anderen zu notifizieren ist, so dass jenes in Bezug auf die Notifikation als Sender (links) fungiert und letzteres als Empfänger (rechts). Jedes Automatisierungsgerät 16, 18 - also Sender und Empfänger - umfasst eine Verarbeitungseinheit 42 nach Art eines Mikroprozessors oder dergleichen. In einem Speicher 44 ist ein Steuerungsprogramm 46 abgelegt oder ablegbar, das Programmcodeanweisungen zur Ausführung des Verfahrens wie hier beschrieben und evtl. auch seiner Ausgestaltungen umfasst. Ein oder mehrere Zähler 48 als exemplarische Mittel zur Ermitteln eines Maßes für einen Versatz zwischen dem Zeitpunkt des Eintreffens eines (Synchron-)Signals und einem für eine Telegrammübermittlung nächstverwendbaren Kommunikationstakt 30 können dabei in Hardware oder auch in Software, also als Funktionalität des Steuerungsprogramms 46 implementiert sein.

In der unteren Hälfte der Darstellung in FIG 6 ist dazu jeweils für den Sender und den Empfänger in einem schematisch vereinfachten Flussdiagramm der Ablauf des Steuerungsprogramms 46, soweit die Behandlung des Eingangs eines Synchronsignals 24 und die Erzeugung eines diesbezüglichen Ausgangssignals 26 betroffen ist, dargestellt. Mit dem Eintreffen eines Synchronsignals 24 wird beim Sender ein Zähler 48 gestartet (erster Funktionsblock 50). Auf Senderseite wird sodann ein Maß für einen Versatz zwischen dem Auftreten des Synchronsignals 24 und dem Kommunikationstakt 30 ermittelt, indem der Zählerstand beim nächstverwendbaren Kommunikationstakt eingefroren oder zwischengespeichert wird (zweiter Funktionsblock 52). Der Zählerstand wird sodann als ermitteltes Maß für den Versatz an den Empfänger in einem Telegramm 28 übermittelt (dritter Funktionsblock 54). Auf Empfängerseite wird mit dem Erhalt des Telegramms 28 der so erhaltene Zählerstand zur Initialisierung eines empfängerseitigen Zählers 48 übernommen (vierter Funktionsblock 56). Der Zähler 48 wird sodann kontinuierlich dekrementiert (fünfter Funktionsblock 58) und mit dem Ablauf des Zählers 48 wird in Bezug auf das beim Sender eingegangene Synchronsignal 24 das Ausgangssignal 26 erzeugt (sechster Funktionsblock 60). Das Steuerungsprogramm 46 ist somit ein Beispiel für ein Computerprogramm mit Programmcodeanweisungen zur Implementierung des hier beschriebenen Verfahrens, wenn das Computerprogramm durch ein Automatisierungsgerät 12-18 und dessen Verarbeitungseinheit 42 ausgeführt wird.

## Patentansprüche

1. Verfahren zum Betrieb eines zur Steuerung und/oder Überwachung eines technischen Prozesses (22) vorgesehenen Automatisierungssystems (10) mit mehreren über eine serielle Verbindung (20) kommunikativ verbundenen Kommunikationsteilnehmern (12-18), von denen zumindest einer als Sender (18) und zumindest einer als Empfänger (14,16) fungiert, und zur feingranularen Untersetzung eines allen Kommunikationsteilnehmern (12-18) gemeinsamen Kommunikationstakts (30),
wobei auf Senderseite ein Maß für einen Versatz zwischen einem Auftreten eines Synchronsignal (24), nämlich eines Signals (24) aus dem technischen Prozess (22) oder aufgrund von Daten aus dem technischen Prozess (22), auf das mehrere Empfänger (14, 16) gleichzeitig oder zumindest im Wesentlichen gleichzeitig reagieren sollen oder auf das im Falle eines periodischen Signals (24) der oder jeder Empfänger (14, 16) mit der gleichen Periodizität reagieren soll, und einem Kommunikationstakt (30), mit dem ein aufgrund des Synchronsignals (24) generiertes Telegramm (28) versendet wird, ermittelt wird,
wobei das ermittelte Maß für den Versatz bei einer Datenübertragung an den oder jeden Empfänger (14,16) übermittelt wird,
wobei der oder jeder Empfänger (14,16) nach Empfang des ermittelten Maßes für den Versatz das Verstreichen einer entsprechenden Zeitspanne abwartet und
nach Verstreichen der Zeitspanne ein Ausgangssignal (26) für den technischen Prozeß (22) erzeugt.

2. Verfahren nach Anspruch 1, wobei als Maß für den Versatz zwischen dem Auftreten des Synchronsignals (24) und dem Kommunikationstakt (30) ein Wert eines mit dem Synchronsignal (24) oder dem Kommunikationstakt (30) gestarteten Zählers (48) verwendet wird.

3. Verfahren nach Anspruch 2, wobei der Wert des Zählers (48) in Bezug auf einen Kommunikationstakt (30) ausreichend groß gewählt wird, so dass der Zähler (48) jedenfalls nicht während eines Kommunikationstakts (30) abläuft.

4. Verfahren nach Anspruch 2 oder 3, wobei der mit dem Synchronsignal (24) gestartete Zähler (48) mit jedem Auftreten eines Gerätetakts (32) dekrementiert oder inkrementiert wird.

5. Verfahren nach Anspruch 1, 2, 3 oder 4, wobei der oder jeder Empfänger (14, 16) zum Abwarten des Verstreichens einer dem ermittelten Versatz entsprechenden Zeitspanne einen Zähler (48) mit dem ermittelten Versatz lädt und beim Ablauf des Zählers (48) das Ausgangssignal (26) erzeugt.

6. Verfahren nach Anspruch 4 und 5, wobei auf Seiten des oder jedes Empfängers (14,16) der Zähler (48) mit jedem Auftreten des Gerätetakts (32) dekrementiert wird.

7. Verfahren nach Anspruch 1, 2, 3 oder 4, wobei der oder jeder Empfänger (14,16) zum Abwarten des Verstreichens einer dem ermittelten Versatz entsprechenden Zeitspanne mit jedem Kommunikationstakt (30) einen Zähler (48) startet, den Wert des Zählers (48) mit dem ermittelten Versatz vergleicht und bei Übereinstimmung das Ausgangssignal (26) erzeugt.

8. Verfahren nach einem der vorangehenden Ansprüche, wobei bei einem ersten und einem zweiten Synchronsignal (34,36) mit jedem Synchronsignal (34,36) ein mit dem Gerätetakt (32) beaufschlagter Zähler (48) gestartet wird, wobei der erste Zähler (48) bei einer zu dem ersten Synchronsignal (34) gehörenden ersten Datenübertragung mit dem Kommunikationstakt (30) gestoppt wird, wobei in der ersten Datenübertragung der Stand des ersten Zählers (48) übermittelt wird und wobei der zweite Zähler (48) nach Abschluss der ersten Datenübertragung bei einer zu dem zweiten Synchronsignal (36) gehörenden zweiten Datenübertragung mit dem Kommunikationstakt (30) gestoppt wird und wobei in der zweiten Datenübertragung der Stand des zweiten Zählers (48) übermittelt wird.

9. Verfahren nach Anspruch 7, wobei der Wert des ersten und zweiten Zählers (48) in Bezug auf einen Kommunikationstakt (30) ausreichend groß gewählt wird, so dass der Zähler jedenfalls nicht während einer vorgegeben Mehrzahl von Kommunikationstakten (30) abläuft.

10. Computerprogramm mit durch eine Verarbeitungseinheit (42) eines Automatisierungsgeräts (12-18) ausführbaren Programmcodeanweisungen zur Implementierung des Verfahrens nach einem der Ansprüche 1 bis 8, wenn das Computerprogramm durch das Automatisierungsgerät (12-18) und dessen Verarbeitungseinheit (42) ausgeführt wird.

11. Speichermedium mit einem durch einen Computer ausführbaren Computerprogramm gemäß Anspruch 10.

12. Automatisierungsgerät (12-18) mit einem Speicher (44), in den als Steuerungsprogramm (46) ein Computerprogramm nach Anspruch 10 geladen ist.

## Claims

1. Method for operating an automation system (10) intended for controlling and/or operating a technical process (22) with a number of communication users (12-18) linked for communication purposes via a serial connection (20), of which at least one functions as sender (18) and at least one as receiver (14, 16), and for fine-granular reduction of a communication clock (30) common to all communication users (12-18),
wherein a measure is determined on the sender side for an offset between an arrival of a synchronous signal (24), namely a signal (24) from the technical process (22) or due to data from the technical process (22) to which a number of receivers (14, 16) are to react simultaneously or at least essentially simultaneously or to which, in the event of a periodic signal (24), the receiver or each receiver (14, 16) is to react with the same periodicity, and a communication clock (30), with which a telegram (28) generated as a result of the synchronous signal (24) will be sent,
wherein the determined measure for the offset is transferred in a data transmission to the receiver or each receiver (14, 16),
wherein the receiver or each receiver (14, 16), after receipt of the determined measure for the offset, waits for an appropriate period of time to elapse and
generates an output signal (26) for the technical process (22) after the said period of time has elapsed.

2. Method according to claim 1, wherein a value of a counter (48) started with the synchronous signal (24) or the communication clock (30) is used as a measure for the offset between the occurrence of the synchronous signal (24) and the communication clock (30).

3. Method according to claim 2, wherein the value of the counter (48) is selected sufficiently large in relation to a communication clock (30) so that the counter (48) in any event does not time out during a communication clock (30).

4. Method according to claim 2 or 3, wherein the counter (48) started with the synchronous signal (24) is decremented or incremented with each occurrence of a device clock (32).

5. Method according to claim 1, 2, 3 or 4, wherein the receiver or each receiver (14, 16), in order to wait for a period of time corresponding to the determined offset to elapse, loads a counter (48) with the determined offset and, when the counter times out (48), generates the output signal (26).

6. Method according to claim 4 and 5, wherein the counter (48) is decremented on the receiver side or on each receiver side (14, 16) with each occurrence of the device clock (32).

7. Method according to claim 1, 2, 3 or 4, wherein the receiver or each receiver (14, 16), in order to wait for a period of time corresponding to the determined offset to elapse, starts a counter (48) with each communication clock (30), compares the value of the counter (48) with the offset determined and generates the output signal (26).

8. Method according to one of the preceding claims, wherein a counter (48) to which the device clock (32) has been applied is started for a first and a second synchronous signal (34, 36), with each synchronous signal (34, 36), wherein the first counter (48) is stopped with the communication clock (30) for a first data transmission belonging to the first synchronous signal (34), wherein, in the first data transmission, the state of the first counter (48) is transferred and wherein the second counter (48), after the conclusion of the first data transmission, is stopped at a second data transmission belonging to the second synchronous signal (36) with the communication clock (30) and wherein this state of the second counter (48) is determined in the second data transmission.

9. Method according to claim 7, wherein the value of the first and second counter (48) is selected sufficiently large in relation to a communication clock (30) so that the counter in any event does not time out during a predetermined plurality of communication clocks (30).

10. Computer program with program code instructions able to be executed by a processing unit (42) of an automation device (12-18) for implementing the method according to one of claims 1 to 8 when the computer program is executed by the automation device (12-18) and its processing unit (42).

11. Memory medium with a computer program able to be executed by a computer according to claim 10.

12. Automation device (12-18) with a memory (44), into which a computer program according to claim 10 is loaded as a control program (46).

## Revendications

1. Procédé pour faire fonctionner un système (10) d'automatisation, qui est prévu pour commander et/ou contrôler un processus ( 22 ) technique et qui a plusieurs participants ( 12 à 18 ) de communication reliés en communication par une liaison ( 22 ) série, dont l'un au moins sert d'émetteur ( 18 ) et dont l'un au moins sert de récepteur ( 14, 16 ), et la soumission à granulation fine d'un cycle ( 30 ) de communication commun à tous les participants ( 12 à 18 ) de communication,
dans lequel, du côté de l'émetteur, on détermine une mesure d'un décalage entre une apparition d'un signal ( 24 ) de synchronisation, à savoir un signal ( 24 ) provenant du processus ( 22 ) technique ou sur la base de données provenant du processus ( 22 ) technique, auquel plusieurs récepteurs ( 14, 16 ) doivent réagir simultanément ou au moins sensiblement simultanément, ou auquel, dans le cas d'un signal ( 24 ) périodique, le récepteur ( 14, 16 ) ou chaque récepteur ( 14, 16 ) doit réagir avec la même périodicité, et un cycle ( 30 ) de communication, auquel un télégramme ( 28 ) produit sur la base du signal ( 24 ) de synchronisation est envoyé, dans lequel on transmet la mesure déterminée du décalage pour une transmission de données au récepteur ( 14, 16 ) ou à chaque récepteur ( 14, 16 ),
dans lequel le récepteur ( 14, 16 ) ou chaque récepteur ( 14, 16 ) attend, après la réception de la mesure déterminée du décalage, l'écoulement du laps de temps adéquat et, après écoulement du laps de temps, produit un signal ( 26 ) de sortie pour le processus ( 22 ) technique.

2. Procédé suivant la revendication 1, dans lequel on utilise, comme mesure du décalage entre l'apparition du signal ( 24 ) de synchronisation et le cycle ( 30 ) de communication, une valeur d'un compteur ( 48 ) qu'on a fait commencer à compter avec le signal ( 24 ) de synchronisation ou avec le cycle ( 30 ) de communication.

3. Procédé suivant la revendication 2, dans lequel on choisit la valeur du compteur ( 48 ) par rapport à un cycle ( 30 ) de communication suffisamment grande, de sorte que, en tout cas, le compteur ( 48 ) ne s'arrête pas pendant un cycle ( 30 ) de communication.

4. Procédé suivant la revendication 2 ou 3, dans lequel on décrémente ou on incrémente le compteur ( 48 ) que l'on a fait commencer à compter avec le signal ( 24 ) de synchronisation à chaque apparition d'un cycle ( 32 ) d'appareil.

5. Procédé suivant la revendication 1, 2, 3 ou 4, dans lequel le récepteur ( 14, 16 ) ou chaque récepteur ( 14, 16 ) charge, pour attendre l'écoulement d'un laps de temps correspondant au décalage déterminé, un compteur ( 48 ) du décalage déterminé et produit le signal ( 26 ) de sortie à l'épuisement du compteur ( 48 ).

6. Procédé suivant les revendications 4 et 5, dans lequel on décrémente, du côté du récepteur ( 14, 16 ) ou de chaque récepteur ( 14, 16 ), le compteur ( 48 ) à chaque apparition du cycle ( 32 ) d'appareil.

7. Procédé suivant la revendication 1, 2, 3 ou 4, dans lequel le récepteur ( 14, 16 ) ou chaque récepteur ( 14, 16 ) fait, pour attendre l'écoulement d'un laps de temps correspondant au décalage déterminé, commencer un compteur ( 48 ) à compter à chaque cycle ( 30 ) de communication, compare la valeur du compteur ( 48 ) au décalage déterminé et, s'il y a coïncidence, produit le signal ( 26 ) de sortie.

8. Procédé suivant l'une des revendications précédentes, dans lequel, pour un premier et un deuxième signal ( 34, 36 ) de synchronisation, on fait commencer le compteur ( 48 ) alimenté en le cycle ( 32 ) d'appareil à compter à chaque signal ( 34, 36 ) de synchronisation, le premier compteur ( 48 ) étant arrêté pour une première transmission de données avec le cycle ( 30 ) de communication appartenant au premier signal ( 34 ) de synchronisation, tandis que, dans la première transmission de données, on transmet l'état du premier compteur ( 48 ) et le deuxième compteur ( 48 ), après la fin de la première transmission de données et pour une deuxième transmission de données avec le cycle ( 30 ) de communication appartenant au deuxième signal ( 36 ) de synchronisation, est arrêté et dans lequel, dans la deuxième transmission de données, on transmet l'état du deuxième compteur ( 48 ).

9. Procédé suivant la revendication 7, dans lequel on choisit la valeur du premier et du deuxième compteurs ( 48 ), par rapport à un cycle ( 30 ) de communication, suffisamment grande, de sorte que le compteur ne s'épuise pas, en tout cas, pendant une multiplicité donnée à l'avance de cycles ( 30 ) de communication.

10. Programme d'ordinateur ayant des instructions de code de programme pouvant être réalisées par une unité ( 42 ) de traitement d'un appareil ( 12 à 18 ) d'automatisation pour la mise en oeuvre du procédé suivant l'une des revendications 1 à 8, lorsque le programme d'ordinateur est exécuté par l'appareil ( 12 à 18 ) d'automatisation et son unité ( 42 ) de traitement.

11. Support de mémoire ayant un programme d'ordinateur suivant la revendication 10 pouvant être réalisé par un ordinateur.

12. Appareil ( 12 à 18 ) d'automatisation ayant une mémoire ( 44 ), dans laquelle est chargé, comme programme ( 46 ) de commande, un programme d'ordinateur suivant la revendication 10.
